# EUROPÄISCHE PATENTANMELDUNG

(11) **EP 0 562 532 A1**
(43) Veröffentlichungstag der Anmeldung: **29.09.1993**
(21) Anmeldenummer: 93104706.2
(22) Anmeldetag: 22.03.1993
(51) Int. Cl.: B09B 1/00

(54) **Verfahren zur Aufbereitung einer Deponie**

(30) Priorität: 24.03.1992 DE 4209467
(71) Anmelder: Paurat, Friedrich Wilhelm, D-46485 Wesel (DE); Paurat, Roland, Dipl.-Ing., D-46485 Wesel (DE)
(72) Erfinder: Paurat, Friedrich Wilhelm, D-46485 Wesel (DE); Paurat, Roland, Dipl.-Ing., D-46485 Wesel (DE)
(74) Vertreter: Andrejewski, Walter, Dr.

(57) **Zusammenfassung**

Verfahren zur Aufbereitung einer Deponie, deren Deponiekörper durch ein Sicherungsbauwerk zum Auffangen und Abführen von Sickerwasser unterfangen ist. Das Sicherungsbauwerk weist unterhalb der Deponie eine Sicherungsbauwerkstrecke und in die Sicherungsbauwerkstrecke einmündende Drainageeinrichtungen auf. Das Sickerwasser wird über die Sicherungsbauwerkstrecke abgeführt und der Entsorgung zugeführt. Der Schadstoffgehalt des Deponiekörpers und die Schadstoffverteilung im Deponiekörper werden ermittelt. In den Deponiekörper wird von der Oberfläche her und/oder durch Bohrungen nach Maßgabe des Schadstoffgehaltes sowie der Schadstoffverteilung eine Aufbereitungsflüssigkeit eingeführt, die mit den Schadstoffen reagiert und/oder mit der die Schadstoffe bzw. deren lösliche Reaktionsprodukte auswaschbar sind. Das im Zuge der Verfahrensstufe b) anfallende Eluat, welches in die Drainageeinrichtungen eintritt, wird in der Sicherungsbauwerkstrecke aufgefangen und über die vorhandenen Einrichtungen der Entsorgung zugeführt. Das Eluat wird nach Maßgabe des hydrostatischen Potentials und/oder durch Anlegen eines Unterdruckes aus den Drainageeinrichtungen abgeführt.

## Beschreibung

Die Erfindung betrifft ein Verfahren zur Aufbereitung einer Deponie, deren Deponiekörper durch ein Sicherungsbauwerk zum Auffangen und Abführen von Sickerwasser unterfangen ist, wobei das Sicherungsbauwerk unterhalb der Deponie eine Sicherungsbauwerkstrecke und in die Sicherungsbauwerkstrecke einmündende Drainageeinrichtungen, z.B. in Form von Drainagerohren, aufweist, und wobei das Sickerwasser über die Sicherungsbauwerkstrecke abgeführt und der Entsorgung zugeführt wird. Das Sickerwasser ist kontaminiert. - Bei dem Sicherungsbauwerk kann es sich soweit es an die Sicherungsbauwerkstrecke angeschlossen ist, um ein geschlossenes Abdichtungsbauwerk in Form einer Wanne oder Halbwanne handeln, in das die Drainageeinrichtungen integriert sind (vgl. DE 40 18 822 A1). Die Funktion der Wanne oder Halbwanne kann jedoch auch hydrostatisch durch rostartig angeordnete Rohre und Röhren erzeugt sein (vgl. DE 40 26 048 A1, DE 40 36 103 A1 und DE 40 36 104 A1).

Im Rahmen der bekannten Maßnahmen, von denen die Erfindung ausgeht, läuft aus dem Deponiekörper Sickerwasser ab, welches als Oberflächenwasser, z.B. durch Regen und/oder als Grundwasser in den Deponiekörper eintritt. Zweck und Funktion des Sicherungsbauwerkes ist es, das Sickerwasser aufzufangen und dadurch zu verhindern, daß das Sickerwasser vagabundiert und in das Grundwasser eintritt. Eine Aufbereitung der Deponie findet nicht statt. Aufbereitung der Deponie meint im Rahmen der Erfindung, daß in dem Deponiekörper die Schadstoffe in schadlose Stoffe umgewandelt werden und/oder daß der Deponiekörper von den Schadstoffen befreit wird, so daß im Ergebnis die Deponie wieder zu einem durch Schadstoffe nicht mehr gestörten lebenden Böden mit den dazugehörenden Biozönosen wird. - Der Erfindung liegt die Aufgabe zugrunde, eine Deponie im Sinne der vorstehenden Ausführungen aufzubereiten.

Zur Lösung dieser Aufgabe lehrt die Erfindung die Kombination der folgenden Merkmale:
Verfahren zur Aufbereitung einer Deponie, deren Deponiekörper durch ein Sicherungsbauwerk zum Auffangen und Abführen von Sickerwasser unterfangen ist, wobei das Sicherungsbauwerk unterhalb der Deponie eine Sicherungsbauwerkstrecke und in die Sicherungsbauwerkstrecke einmündende Drainageeinrichtungen, z.B. in Form von Drainagerohren, aufweist,
und wobei das Sickerwasser über die Sicherungsbauwerke abgeführt und der Entsorgung zugeführt wird, gekennzeichnet durch die Kombination der folgenden Merkmale:
a) Der Schadstoffgehalt des Deponiekörpers und die Schadstoffverteilung im Deponiekörper werden ermittelt,
b) in den Deponiekörper wird von der Oberfläche her und/oder durch Bohrungen nach Maßgabe des Schadstoffgehaltes sowie der Schadstoffverteilung eine Aufbereitungsflüssigkeit eingeführt, die mit den Schadstoffen reagiert und/oder mit der die Schadstoffe bzw. deren lösliche Reaktionsprodukte auswaschbar sind,
c) das im Zuge der Verfahrensstufe b) anfallende Eluat, welches in die Drainageeinrichtungen eintritt, wird in der Sicherungsbauwerkstrecke aufgefangen und über die vorhandenen Einrichtungen der Entsorgung zugeführt,
wobei das Eluat nach Maßgabe des hydrostatischen Potentials und/oder durch Anlegen eines Unterdruckes aus den Drainageeinrichtungen abgeführt wird. Dabei werden der Schadstoffgehalt sowie die Schadstoffverteilung des Deponiekörpers zum Beispiel durch Bohrungen und Probenentnahme ermittelt, wobei die Möglichkeit besteht, über die Bohrungen auch die Aufbereitungsflüssigkeit in den Deponiekörper einzuführen. Eine bevorzugte Ausführungsform der Erfindung ist dadurch gekennzeichnet, daß die Bohrungen mit mündungsoffenen Rohren und/oder mündungsverschlossenen wandungsoffenen Rohren verrohrt werden und über die Rohrmündungen und/oder die Bohrungen in den Rohrwandungen die Aufbereitungsflüssigkeit in den Deponiekörper eingeführt wird. Die Aufbereitungsflüssigkeit kann in flüssiger Phase zugeführt werden. Die Aufbereitungsflüssigkeit kann aber auch in dampfförmiger Phase zugeführt werden. Insoweit verwirklicht die Erfindung gleichsam eine chemische Aufbereitung der Deponie im Sinne einer Eluationsreinigung mit Abzug des Eluates. Die Auswahl der Aufbereitungsflüssigkeit bereitet dem chemisch gebildeten Fachmann keine Probleme. Insbesondere kann insoweit auf die Erfahrungen des sogenannten Laugungsbergbaus zurückgegriffen werden. Im Rahmen der Erfindung liegt es, mit der Aufbereitungsflüssigkeit auch Bakterien, z.B. Prokaryonten, in den Deponiekörper einzuführen, um die Aufbereitung der Deponie biologisch durchzuführen oder biologisch zu unterstützen.

Es versteht sich, daß im Rahmen der erfindungsgemäßen Maßnahmen der Deponiekörper oberflächenseitig abgedeckt werden kann, und zwar so, daß eine Belüftung, z.B. mit sauerstoffreicher Luft durchgeführt werden kann oder auch der Zutritt von Luft verhindert wird. Auf diese Weise kann insbesondere im Zusammenhang mit einer biologischen Aufbereitung sowohl ein anaerober als auch ein aerober Betrieb verwirklicht werden. Im Rahmen der Erfindung liegt es, nach Durchführung der beschriebenen Maßnahmen den aufbereiteten Deponiekörper zu spülen, beispielsweise indem in der beschriebenen Art und Weise Wasser in den Deponiekörper eingeführt und über die Drainageeinrichtungen abgezogen wird, wobei durch dieses Wasser der Deponiekörper gewaschen wird.

Die Erfindung beruht auf der Erkenntnis, daß bei Deponien, die in der beschriebenen Art und Weise mit einem Sicherungsbauwerk versehen sind, das Sicherungsbauwerk nicht lediglich zu einer passiven Sicherung einsetzbar ist. Es kann, wie die Erfindung lehrt, ohne besonderen zusätzlichen Aufwand gleichsam zusätzlich als aktiver Apparat der chemischen und/oder biologischen Verfahrenstechnik arbeiten und eine Aufbereitung der Deponie bewirken. Ist diese durchgeführt, so kann das Sicherungsbauwerk seine ursprüngliche Funktion als Sicherungsbauwerk fortführen, wenn dieses zweckmäßig erscheint. Es kann aber auch stillgelegt und verfüllt werden.

## Patentansprüche

1. Verfahren zur Aufbereitung einer Deponie, deren Deponiekörper durch ein Sicherungsbauwerk zum Auffangen und Abführen von Sickerwasser unterfangen ist, wobei das Sicherungsbauwerk unterhalb der Deponie eine Sicherungsbauwerkstrecke und in die Sicherungsbauwerkstrecke einmündende Drainageeinrichtungen, z.B. in Form von Drainagerohren, aufweist,
und wobei das Sickerwasser über die Sicherungsbauwerkstrecke abgeführt und der Entsorgung zugeführt wird, gekennzeichnet durch die Kombination der folgenden Merkmale:
a) Der Schadstoffgehalt des Deponiekörpers und die Schadstoffverteilung im Deponiekörper werden ermittelt,
b) in den Deponiekörper wird von der Oberfläche her und/oder durch Bohrungen nach Maßgabe des Schadstoffgehaltes sowie der Schadstoffverteilung eine Aufbereitungsflüssigkeit eingeführt, die mit den Schadstoffen reagiert und/oder mit der die Schadstoffe bzw. deren lösliche Reaktionsprodukte auswaschbar sind,
c) das im Zuge der Verfahrensstufe b) anfallende Eluat, welches in die Drainageeinrichtungen eintritt, wird in der Sicherungsbauwerkstrecke aufgefangen und über die vorhandenen Einrichtungen der Entsorgung zugeführt,
wobei das Eluat nach Maßgabe des hydrostatischen Potentials und/oder durch Anlegen eines Unterdruckes aus den Drainageeinrichtungen abgeführt wird.

2. Verfahren nach Anspruch 1, dadurch gekennzeichnet, daß der Schadstoffgehalt sowie die Schadstoffverteilung des Deponiekörpers durch Bohrungen und Probeentnahmen ermittelt werden und über die Bohrungen die Aufbereitungsflüssigkeit in den Deponiekörper eingeführt wird.

3. Verfahren nach einem der Ansprüche 1 oder 2, dadurch gekennzeichnet, daß die Bohrungen mit mündungsoffenen Rohren und/oder wandungsoffenen Rohren verrohrt werden und über die Rohrmündungen und/oder die Bohrungen in den Rohrwandungen die Aufbereitungsflüssigkeit in den Deponiekörper eingeführt wird.

4. Verfahren nach einem der Ansprüche 1 bis 3, wobei die Aufbereitungsflüssigkeit in flüssiger Phase zugeführt wird.

5. Verfahren nach einem der Ansprüche 1 bis 3, wobei die Aufbereitungsflüssigkeit in dampfförmiger Phase zugeführt wird.
